# EUROPEAN PATENT APPLICATION

(11) **EP 3 459 646 A1**
(43) Date of publication of application: **27.03.2019**
(21) Application number: 17192682.7
(22) Date of filing: 22.09.2017
(51) Int. Cl.: B06B 1/06, B06B 1/02, G01H 11/08, G10K 11/34, G10K 9/125, H01L 41/083, H01L 41/09, H01L 41/113, H01L 41/04

(54) **ULTRASOUND TRANSDUCER DEVICE AND METHOD FOR CONTROLLING THE SAME**

(71) Applicant: Koninklijke Philips N.V., 5656 AE Eindhoven (NL)
(72) Inventor: HAKKENS, Franciscus Johannes Gerardus, 5656 AE Eindhoven (NL); SHULEPOV, Sergei, 5656 AE Eindhoven (NL); DIRKSEN, Peter, 5656 AE Eindhoven (NL); JOHNSON, Mark Thomas, 5656 AE Eindhoven (NL); VAN DEN ENDE, Daan Anton, 5656 AE Eindhoven (NL)
(74) Representative: de Haan, Poul Erik

(57) **Abstract**

The invention provides an ultrasound transducer device (20) comprising an electroactive polymer (EAP) element (26) coupled atop a capacitive micromachined ultrasonic transducer, CMUT, element (22), wherein the two elements are controlled to vibrate concurrently at a common frequency by application to each of a drive signal of the same AC frequency.

## Description

### FIELD OF THE INVENTION

This invention relates to an ultrasound transducer device and method for controlling the same.

### BACKGROUND OF THE INVENTION

Capacitive micromachined ultrasonic transducers (CMUT transducers) require an acoustic window to be provided covering their acoustic output surface, for protection.

Known materials which can function to provide such a window include for example silicones, rubber, polymethylpentene ("TPX"). In general, a dual-layer structure is required, combining a soft deformable layer disposed in contact with the CMUT membrane and a harder protective material disposed on top.

However, known window arrangements and materials all impose a negative impact upon the overall acoustic performance of the CMUT transducer, in particular through acoustic damping of the ultrasound vibrations, and through reflections (reverb) caused by acoustic impedance mismatching at the interface between window sublayers and at the interface between the window and incident tissue.

Polyvinylidene fluoride (PVDF) based ultrasound transducers are also known. These are mostly applicable at very high operating frequencies (for instance above 30 MHz). At lower frequencies, the pressure output achievable using these transducers (and hence the achievable power of generated ultrasound vibrations) is significantly lower compared with that achievable by ceramic (such as CMUT) based transducers.

There is a need therefore for an improved CMUT based ultrasound device, wherein the problems of acoustic damping and impedance mismatching may be addressed, but without compromising on the protective functionality of the acoustic window.

### SUMMARY OF THE INVENTION

According to examples in accordance with an aspect of the invention, there is provided an ultrasound transducer device, comprising: a capacitive micromachined ultrasound transducer, CMUT, element; an electroactive polymer element coupled to and at least partially covering a surface of the CMUT element; and a controller adapted to control the ultrasound device to generate ultrasound oscillations by driving the CMUT element and the electroactive polymer element concurrently, each with a drive signal of the same AC frequency.

The invention is based on replacing a passive acoustic window which merely passively carries and transmits the acoustic vibrations generated by the CMUT transducer element with an active acoustic window which itself is driven to oscillate at the same frequency as, and in concurrence with, the CMUT element. The two effectively couple to form a single acoustic system, their respective vibrational actions combining in a single effective stroke action which is then applied directly to an incident surface by an upper surface of the window.

This provides three main advantages.

Firstly, acoustic vibrations of the CMUT transducer are no longer passively transmitting through the material of the window element in order to reach an incident tissue surface. Rather, they are effectively superposing in-phase with vibrations being generated at the same time by the EAP element, the two then being applied as one to the incident tissue. Hence, the problem of acoustic damping, caused by transmission through the acoustic window material, is substantially or wholly avoided.

Secondly, since vibrations of the CMUT are not being transmitted across the window element, but rather are combining mechanically with the oscillations of the EAP element and applied directly to an incident tissue, the problem of impedance mismatch caused by vibrations passing across boundaries of the window element is also avoided. Vibrations of the CMUT no longer travel across the boundary either between the window element and the CMUT or between the window and an incident tissue surface. Hence, the problem of reflections at boundaries is substantially avoided, thereby increasing image quality (through reducing reverb and increasing bandwidth).

Thirdly, the additional vibratory action of the EAP element (being driven in-phase with that of the CMUT element) provides extra pressure output, and hence enhanced ultrasound wave power when generating ultrasound waves. If the device is operated to sense ultrasound waves, additional sensitivity is provided as sound waves stimulate not only the CMUT transducer but also the EAP element. The EAP element is typically more sensitive to low power vibrations.

For the avoidance of doubt references to 'CMUT transducer' or 'transducer element' or CMUT element may be used interchangeably in this disclosure and may all be taken to be referring to a capacitive micromachined ultrasonic transducer (CMUT) element.

By providing the EAP element at least partially covering a surface of the CMUT element, the EAP element provides the function of a window element, protecting and providing an out-coupling interface for an acoustic output surface of the CMUT element.

The invention is based on replacing a passive window element with an active EAP element. For brevity, in descriptions which follow, the term 'EAP element' or 'electroactive polymer element' may be used interchangeably with 'window element' or 'active window element'.

The EAP element and CMUT element may be driven by the same drive signal or may be driven by separate drive signals, but at the same frequency and in-phase with one another.

As the skilled person will be aware, electroactive polymers (EAP) are an emerging class of materials within the field of electrically responsive materials. EAPs are one example of the broader class of electroactive materials (EAMs). In particular, EAPs are an example of an organic EAM.

Advantages of EAPs include low power, small form factor, flexibility, noiseless operation, accuracy, the possibility of high resolution, fast response times, and cyclic actuation.

The improved performance and particular advantages of EAP material give rise to applicability to new applications.

Electroactive polymers have the property of deforming in response to application of an electrical stimulus. There exist field-driven EAPs and ionic (i.e. current) driven EAPs.

For the present invention, by driving the EAP element with an alternating (i.e. sinusoidal) electrical stimulus, the EAP element is driven to contract (or expand) and relax in a cyclical fashion and at a frequency matching the applied stimulus. Where a stimulus is applied at ultrasound type frequencies, the resulting vibrational deformation action of the EAP element provides a source of ultrasound vibrations.

For the present application, suitable EAPs include any which are suitable for driving at ultrasound-type frequencies, i.e. frequencies > ∼20 kHz.

A particularly preferred group of EAPs known to be suitable for driving at such frequencies are PVDF based relaxor polymers. PVDF relaxor polymers show spontaneous electric polarization (field-driven alignment). These materials can be pre-strained for improved performance in the strained direction (pre-strain leads to better molecular alignment).

In accordance with any embodiment, preferably the EAP element and CMUT element may be driven with an electrical signal (or signals) having a single frequency component (i.e. a mono-frequency AC signal), to ensure that their respective oscillations may most efficiently superpose in a constructive manner. It is through this constructive interference that the problems associated with known CMUT devices may be overcome. A multi-frequency signal may render strong constructive interference more difficult or less effective at achieving a single unified oscillatory system.

By 'drive signal' is meant an electrical signal, for example an electrical voltage or current. The drive signal may be in the form of an electric field generated across the element in question, in particular an alternating or oscillatory field, for instance a sinusoidal field. An alternating field can be generated by supplying an alternating current to the electrodes. Alternatively the drive signal may be in the form of a current applied across the element in question, in particular an AC current.

In examples, the electroactive polymer element may be directly coupled to the CMUT element. More particularly, the electroactive polymer element may be directly coupled to a membrane of the CMUT element. As the skilled person will be aware, CMUT transducers typically comprise a membrane arranged extending over a cavity, with application of an electrical stimulus stimulating vibration of the membrane at ultrasonic frequencies, to thereby generate ultrasound vibrations.

By directly coupled is meant without an intermediary material layer. However, an electrode may in some cases be disposed between the two in accordance with these examples. Direct coupling may improve the power output of the device, since there is no intermediary material layer between the CMUT element and EAP element which might otherwise store, absorb or dampen some of the generated vibratory power.

The controller may be adapted, in accordance with at least one control mode, to control the device to sense ultrasound oscillations by sensing electrical signals generated by the CMUT element and the electroactive polymer element. In this case, the controller has two control modes, an active, actuating or outputting mode in which the EAP and CMUT elements are controlled to generate ultrasound waves, and a sensing or passive mode, in which the EAP and CMUT elements are used to sense oscillations received at the device. Oscillations received at either the CMUT element or the EAP element will cause generation by the respective element of an electrical output, having an amplitude or magnitude commensurate with the amplitude or power of the received vibration.

The dual-layer structure increases the sensitivity of the device compared with examples comprising a passive window layer. The EAP element itself provides an additional sensing capability. In addition, the sensing signals of the EAP element and the CMUT element may be decoupled and analyzed individually to provide additional information about the received signal.

In particular, the CMUT element and the electroactive polymer element may be connected separately to the controller, such that independent electrical signals may be sensed at each of the CMUT element and electroactive polymer element.

The EAP element may typically be more sensitive or responsive to signals which are far away from the mechanical resonance frequency of the structure. Separate connection allows the EAP sensing signal (or the transducer signal) to be independently monitored and signals having a frequency far removed from resonance may thereby be sensed with greater reliability. For signals more closely aligned to the resonance frequency, the CMUT transducer element remains a useful signal to monitor in combination with the EAP element.

In one or more embodiments, the controller may be adapted, in accordance with at least one control mode, to drive both the CMUT and electroactive polymer elements with a single drive signal, the elements being connected in electrical parallel or electrical series by at least one provided interconnection arrangement.

In this case, the single same drive signal is provided to both elements. This may simplify operation.

There may be provided further interconnection arrangements in which the elements are electrically isolated from one another, thereby allowing, in accordance with a different control mode, for the elements to be driven by independent drive signals (although still concurrently and at the same frequency). Flexibility may be provided in this way.

In accordance with one or more embodiments, the controller may be adapted in accordance with at least one control mode to drive the CMUT and electroactive polymer elements by separate drive signals. Independent electrical connections may be provided between each element and the controller for this purpose, whereby the elements are controlled in isolation of one another (as mentioned above).

The device may comprise an electrode arrangement in electrical communication with the electroactive polymer element and CMUT element for applying drive signals to the elements, and the electrode arrangement including an electrode disposed on an exposed surface of the electroactive polymer element. The electrode arrangement may include electrodes arranged surrounding each of the EAP and CMUT elements independently, such that each may be driven by an independent drive signal. Alternatively, a single pair of electrodes may be provided surrounding the combined stack of both elements, such that a single signal may be applied to stimulate both. Although the latter may require that the two elements are electrically coupled to one another.

As noted above, typically a CMUT element comprises a membrane arranged extending over a cavity and being drivable to vibrate to thereby generate ultrasound vibrations. The electroactive polymer element may be coupled to the membrane. In accordance with particular examples, said electrode disposed on the exposed surface of the EAP element may be arranged so as to cover from 50% to 75% of the membrane, and preferably from 60% to 70% of the membrane, and even more preferably from 60% to 65% of the membrane.

By 'cover' is generally meant simply 'extend over'. By cover or extend over is generally meant that a projection of the electrode onto (e.g. an upper surface of) the membrane extends across the membrane surface (by a given amount). For example, where the electrode covers or extends over x% of the membrane, a projection of the electrode onto the membrane covers or spans x% of the membrane's surface.

It has been found in experiments by the inventors that coverage over the CMUT membrane by the electrode within the above defined ranges provides the maximal enhancement in output power or pressure of the CMUT element. Optimal coverage is around 65%, and at this level, the achieved increase in the CMUT membrane output pressure is over 10%.

In accordance with one or more embodiments, in accordance with at least one control mode, the controller may be adapted to drive the CMUT element and the electroactive polymer element with drive signals of different respective amplitudes. This allows the EAP element and CMUT element to be driven with different vibrational amplitudes or powers, since the achieved vibrational power or amplitude is related to drive amplitude. The drive signal amplitude may be voltage amplitude for example. The drive signals remain at the same frequency however.

In particular examples, in accordance with at least one control mode, the controller may be adapted to drive the electroactive polymer element with a drive signal of a lower amplitude than the drive signal used to drive the CMUT element.

In accordance with one or more embodiments, the electroactive polymer element and the CMUT element may each be in the form of a layer.

Optionally, the electroactive polymer element layer and CMUT element layer may be coupled to form a bi-layer structure. A bi-layer structure, in isolation for instance of other layers, may enhance the particular benefits of the present invention. In particular, the oscillatory coupling between the two layers may be enhanced in the absence of other layers, thereby leading to greater output performance and also greater mitigation of known problems of damping and reflections. A bi-layer structure in the absence of additional layers may also boost output power, since damping effects of such other layers are eliminated. This arrangement also allows tuning of stiffness and therefore mechanical resonance of the overall structure more straightforwardly.

As noted above, typically a CMUT transducer comprises a membrane arranged extending over a cavity and being drivable to vibrate to thereby generate ultrasound vibrations. In accordance with examples, the electroactive polymer element may be provided having a thickness which is from 8 to 12 times greater than a thickness of the membrane of the CMUT element, and/or the CMUT element membrane may have a thickness of from 1 to 1.5 micrometers.

An advantage of the present invention is that, by consequence of the output power added by the active EAP element, the thickness of the CMUT element (membrane) may be reduced. In particular, it may typically be reduced in thickness by two thirds, for instance from approximately 3 micrometers to approximately 1 micrometer. The EAP layer in this case may be made to a thickness of around 10 micrometers. This ability to reduce the thickness allows the stiffness of the overall structure to be maintained at the same level as if the window element were not present at all.

The invention makes use of electroactive polymer material.

In particular examples, the electroactive polymer element may comprise Polyvinylidene fluoride (PVDF) electroactive polymer material. In more particular examples, this may be PVDF alone, PVDF co-polymers P(VDF-TrFE), or PVDF/(PZT) composites for instance.

Examples in accordance with a further aspect of the invention provide a method of controlling an ultrasound transducer device, the device comprising: a capacitive micromachined ultrasound transducer, CMUT, element, and an electroactive polymer element coupled to and at least partially covering a surface of the CMUT element, and the method comprising: generating ultrasound oscillations by driving both the CMUT element and the electroactive polymer element concurrently, each with a drive signal of the same AC frequency.

In accordance with one or more embodiments, the method may further comprise, in accordance with at least one operating mode, sensing ultrasound oscillations by sensing electrical signals generated by the CMUT element and the electroactive polymer element, and optionally wherein independent electrical signals are sensed at each of the CMUT element and electroactive polymer element.

Examples in accordance with a further aspect of the invention provide an ultrasound diagnostic imaging system comprising an ultrasound transducer device as described in any embodiments or examples outlined above or below, or as defined in any claim of the present application.

These and other aspects of the invention will be apparent from and elucidated with reference to the embodiment(s) described hereinafter.

### BRIEF DESCRIPTION OF THE DRAWINGS

Examples of the invention will now be described in detail with reference to the accompanying drawings, in which:
Figs. 1 and 2 show two possible operating modes for an EAP device;
Fig. 3 illustrates an example ultrasound transducer device in accordance with one or more embodiments of the invention;
Fig. 4 illustrates achieved output pressure enhancement as a function of area coverage of an upper electrode with respect to a CMUT element membrane; and
Fig. 5 shows a block diagram of an exemplary ultrasound diagnostic imaging system.

### DETAILED DESCRIPTION OF THE EMBODIMENTS

The invention provides an ultrasound transducer device comprising an electroactive polymer (EAP) element coupled atop a capacitive micromachined ultrasonic transducer (CMUT) element, wherein the two elements are controlled to vibrate concurrently at a common frequency by application to each of a drive signal of the same AC frequency.

The oscillation of the EAP element combines constructively with that of the CMUT element to provide an amplified overall vibrational output. The active vibrational action of the EAP element also acts to mitigate problems of damping and boundary reflection, since vibrations of the CMUT are no longer passively transmitted across a static window layer, but rather superpose constructively with equivalent vibrations of the window layer to be applied as one as part of a single stroke action of the overall layer structure.

The invention makes use of electroactive polymers (EAPs).

Advantages of EAPs include low power, small form factor, flexibility, noiseless operation, accuracy, the possibility of high resolution, fast response times, and cyclic actuation.

The improved performance and particular advantages of EAP material give rise to applicability to new applications.

Electroactive polymers have the property of deforming in response to application of an electrical stimulus. There exist field-driven EAPs and ionic (i.e. current) driven EAPs.

For the present invention, by driving the EAP element with an alternating (i.e. sinusoidal) electrical stimulus, the EAP element is driven to contract (or expand) and relax in a cyclical fashion and at a frequency matching the applied stimulus. Where a stimulus is applied at ultrasound type frequencies, the resulting vibrational deformation action of the EAP element provides a source of ultrasound vibrations.

For the present application, suitable EAPs include any which are suitable for driving at ultrasound-type frequencies, i.e. frequencies > ∼20 kHz. In particular, the minimum 'switching time' of the EAP element - the time taken for the EAP element to move from one actuation state (e.g. non-actuated) to another (e.g. actuated) - is typically short enough to allow for cyclic switching at ultrasound frequencies, i.e. a switching time less than ∼50 microseconds. This ensures that the EAP element is able to respond quickly enough to an ultrasound frequency signal to generate ultrasound vibrations.

A particularly preferred group of EAPs known to be suitable for driving at such frequencies are PVDF based relaxor polymers. PVDF relaxor polymers show spontaneous electric polarization (field-driven alignment). These materials can be pre-strained for improved performance in the strained direction (pre-strain leads to better molecular alignment).

In PVDF and also PVDF co-polymer, the necessary short response time arises in particular due to an intrinsically small strain response exhibited by these materials when electrically stimulated (compared e.g. to some other EAP materials). The small strain response simply takes less time to complete on each cycle than a larger one, meaning that the minimum time to move between actuation states (the switching frequency) is sufficiently small for the material to oscillate at ultrasound frequencies. This arises in this material in particular due to the fact that the material is stable under the influence of electrical stimulation meaning it does not change phase, which might otherwise lead to larger deformation responses, taking longer to complete on each cycle. However, a material with larger strain responses may still be suitable, provided that the time taken to switch from one actuation state to the other is sufficiently fast.

The applicability of the invention is not limited to any particular EAP material. Any EAP material capable of responding to electrical stimulation in a manner such as to permit it to oscillate at ultrasound frequencies may be used in accordance with the present invention, including those either those known in the present state of the art of EAP materials or as may become known with developments in the field. For example, such materials may exhibit an intrinsic minimum switching time between actuation states equal to or less than the period of a single ultrasound frequency cycle, i.e. around 50 microseconds. The ability of a material to respond to ultrasound frequency stimulation with ultrasound frequency oscillation is a property easily and directly testable through simply applying a stimulus of suitable frequency and monitoring the oscillatory response.

The present invention utilizes electroactive polymer material to provide an active acoustic window element for covering a ceramic (CMUT) transducer to provide protection to the transducer. The EAP window element is driven to oscillate in parallel with the CMUT transducer, the two being driven concurrently and at the same frequency. Consequently the two couple to form a single acoustic system whereby ultrasound oscillations are applied directly to an incident surface by movement of the top of the window element, rather than being passively transmitted across a static window element. Consequently, the deleterious acoustic effects previously caused by such transmission, including dampening and interface reflections, are avoided.

The ceramic membrane thickness may be reduced so that the total stiffness of the device remains substantially as in a design without an active window element. Material may be provided in-between the CMUT element and EAP window element whose stiffness may be selected to optimize pressure output of the device. In examples, stiffness of such material may be increased to increase the pressure gain of the device.

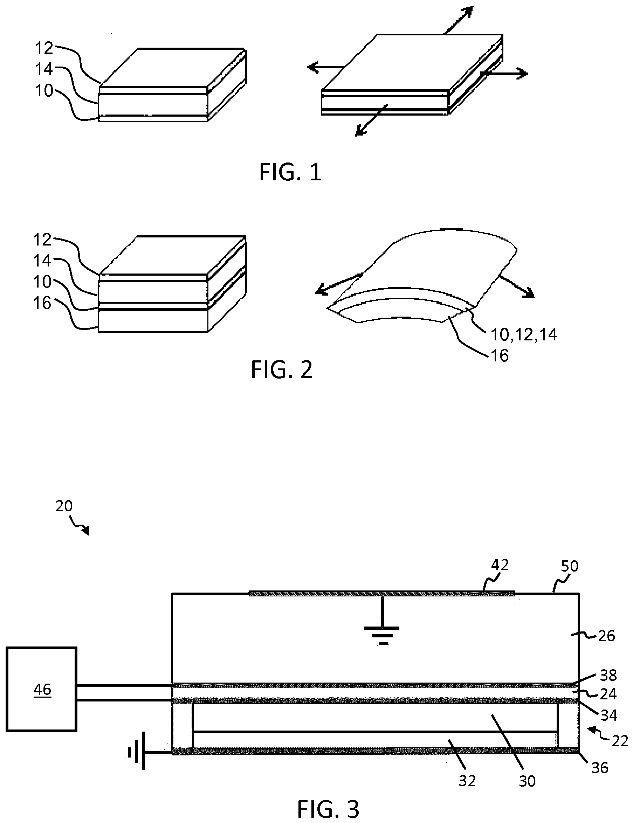

Fig. 3 shows an example ultrasound transducer device 20 in accordance with one or more embodiments of the invention.

The ultrasound transducer device 20 comprises a capacitive micromachined ultrasound transducer (CMUT) element 22 coupled to an electroactive polymer (EAP) element 26 which is arranged covering at least part of an (upper) major surface of the CMUT element. In the present case, the EAP element fully covers the CMUT element, but less than full coverage is also possible in further examples.

For the avoidance of doubt, the terms 'CMUT element', 'transducer element' and 'CMUT transducer element' may be used interchangeably in the present disclosure and all are to be taken to be referring to a capacitive micromachined ultrasound transducer element.

The CMUT element has a standard CMUT structure. The element comprises a silicon substrate 32 having a cavity 30 formed therein, with a thin membrane 24 being suspended over the cavity. Adjacent and coupled to the membrane is an electrode 34 which serves, in combination with a bottom electrode 36 disposed beneath the cavity, to electrically drive the CMUT element.

Unlike more typical ultrasound transducers which operate on a piezoelectric principle, CMUT transducer elements operate on a capacitive transduction principle. The thin membrane 24 suspended above the cavity 30 is driven to vibrate through the application of an AC signal between the two electrodes 34, 36. An alternating electrostatic force is thereby induced between the electrodes, urging the electrodes together and apart in sinusoidal fashion, thereby driving vibration of the mechanically coupled membrane layer 24.

A first 38 and second 42 electrode are also provided disposed about the electroactive polymer element 26 for stimulating oscillatory deformation of the layer. In particular, an AC signal may be applied between the electrodes, thereby providing an alternating electric field across the EAP element. The alternating fields acts to induce an alternating compressive deformation of the element, resulting in alternating net displacement of an upper surface of the element. A vibratory actuation action is thereby created.

The first 38 and second 42 electrodes of the EAP element 26 and the upper 34 and lower 36 electrodes of the CMUT element 22 form an electrode arrangement of the ultrasound transducer device 20.

A controller 46 is provided arranged electrically and operatively coupled to the electrode arrangement for driving the EAP element 26 and CMUT element 22. In the particular example of Fig. 3, the controller is provided electrically coupled to first electrode 38 of the EAP element and to the upper electrode 34 of the CMUT element. The bottom electrode 36 of the CMUT element and the second electrode 42 of the EAP element are each connected to ground.

In use, to generate ultrasound waves the controller is adapted to drive the two elements 22, 26 concurrently, at the same AC frequency, and preferably in phase with one another. As a result, both exhibit the same vibratory actuation action. If the two are driven in-phase, their respective oscillations superpose constructively, and the two effectively form a single oscillatory system with a united stroke which may be applied directly to an incident surface or object by the top surface 50 of the EAP element.

The controller 46 is preferably adapted to be operable in a plurality of different modes, in each of which the controller is adapted to drive the ultrasound element with different behavior. In at least a first mode, the controller is adapted the drive the element as described above, in order to generate ultrasound waves. In a further, optional, mode, the controller may be adapted to control the device 20 to operate in a sensing mode for sensing ultrasound waves. In the sensing mode, the controller is adapted to sense electrical signals generated by the electrodes 34, 38 of the EAP and ultrasound elements, in order to derive an indication of ultrasound stimuli being received at the device. Sensing mode operation will be described in greater detail in passages to follow.

The electroactive polymer (EAP) element 26 at least partially covers a surface of the CMUT element 22, and preferably covers the whole of a surface of the CMUT element. The EAP element hence functions as an active acoustic window, providing protection to the CMUT element against ingress of contaminants and corrosion. The active functionality of the window both mitigates problems associated with static windows, of vibrational damping and reflection as vibrations from the ceramic element 22 propagate across a passive window, but also boosts transductive performance of the ultrasound device 20.

In particular, as discussed, during actuation, the upper electrode 34 of the CMUT element 22 is attracted to the bottom electrode 36 with the same force as for a CMUT with a conventional (static) window. However, as the active window (the EAP element) is driven with a parallel signal, the EAP element shrinks in thickness and expands in width in sinusoidal fashion, in phase with the CMUT element. The combination of the two effects provides extra pressure output. If operated in 'receive' mode, the sensitivity of the device 20 is increased as sound waves deform both elements of the device, resulting in a capacitive signal from the CMUT 22, as well as charge build-up in the EAP element 26 which too can be sensed.

Compared to a prior art CMUT ultrasound device with a static acoustic window, the thickness of the CMUT element membrane 24 may be reduced such that the total stiffness of the bi-element structure (CMUT membrane plus EAP element) matches a desired stiffness for the structure in order to achieve a particular mechanical resonance frequency. Tuning the resonance frequency is important, since it allows vibrational output of the device to be maximized through resonant amplification of the generated vibrations. By choosing the stiffness so that a resonance frequency of the structure substantially matches a preferred AC driving voltage, maximized pressure output is obtained.

By way of example, for the present device, an approximately 3 micrometer thickness CMUT element membrane 24 used in a standard (static window) device may be replaced by an approximately 1 micrometer CMUT element membrane 24 and a 10 micrometer thickness EAP active window.

In preferred examples, the CMUT element 22 and EAP element 26 are provided in the form of layers, such that the two elements form a thin bi-layer laminar structure. The EAP element 26 may be directly coupled to the membrane 24 of the CMUT element.

Coverage of the upper electrode 42 realative to the CMUT membrane 24 arranged beneath may also be optimized for enhanced bending action of the structure. This will be discussed in greater detail in passages to follow. In the particular example illustrated in Fig. 3, the upper (or 'top') electrode 42 is provided covering 70% of the area of the CMUT membrane below. Complete coverage is also an option.

In particular examples, the electroactive polymer element comprises or consists of Polyvinylidene fluoride (PVDF) or a PVDF co-polymer. In particular examples, the EAP element may comprise a body of PVDF, or of PVDF co-polymer such as PVDF-TrFE, or of a PVDF/(PZT) composite, or of a PVDF / piezo-ceramic composite.

The use of electroactive polymer for the active window element provides numerous advantages. Advantages of EAPs include low power consumption, small form factor, flexibility, noiseless operation, accuracy, the possibility of high resolution, fast response times, and (importantly for ultrasound applications) cyclic actuation.

As noted above, PVDF based electroactive polymers are a particularly effective EAP material for use in the present invention since they allow for operation at high frequencies, suitable for generation of ultrasound-frequency oscillations. However, as will be recognized by the skilled person, the particular benefits of EAP as a class of material, e.g. the large achievable deformation and force in a small volume or thin form factor, is not restricted to any one particular material within this class. Any EAP which is suitable for driving at around ultrasound frequencies (i.e. > ∼20kHz) may be used, either those known in the present state of the art of EAP materials or as may become known with developments in the field.

PVDF (fluor polymer) material provides a particularly effective permeation barrier, such that the CMUT element 22 disposed beneath (including electrical interconnects) is very well protected, for instance against corrosion. In the case that the CMUT element 22 develops a fault such that it breaks or splits before or during an actuation procedure, the upper electrode 34 of the element will still be covered with the tough PVDF membrane. As a result a user (e.g. a patient) to which the ultrasound device is being applied is protected from operating voltages running through the electrode.

In examples, the CMUT element 22 and EAP element 26 (or their driving electrodes 34, 38) may be connected together, either in parallel or series, and driven by the same single drive signal. An interconnection arrangement may be provided by which the two elements are connected (preferably in parallel) for thus driving by the same signal. The advantage of driving both with the same single signal is that in-phase driving of the two elements at the same frequency may be straightforwardly achieved without the need for any more complex signal processing.

In alternative examples, the CMUT element 22 and EAP element 26 (or their driving electrodes 34, 38) may be provided separate connections to the controller 46 to allow them to be driven by independent drive signals. When operated in wave-generating mode, two AC drive signals are generated by the controller 46 and applied simultaneously and in-phase to the driving electrodes 34, 38 of each of the CMUT element 22 and the EAP element 26.

In examples, the drive signal provided to the EAP element 26 may be one fraction of the signal provided to the CMUT element 22, or may be provided a (DC) offset with respect the signal applied to the CMUT element 22.

As noted, in use, the EAP material of the EAP element 26 vibrates together with the membrane 24 of the CMUT element 22 so that acoustic waves are generated in a medium by the application of percussive force by the top surface 50 of the EAP element 26. This means that, in contrast to prior art devices, acoustic waves do not need to travel across the boundary of the EAP element 26 and the incident medium surface (e.g. tissue surface) in order to be received in the medium. The waves are generated directly by the application of force to the medium by the top of the EAP element. Therefore an impedance mismatch between the acoustic window material and the receiving medium (e.g. blood, or tissue or gel) does not cause reflections.

In prior art CMUT ultrasound devices, impedance mismatch at boundaries with the acoustic window is a significant issue, resulting in reduced image quality (due to increased boundary reflection or reverb, and reduced bandwidth). By contrast, the arrangement of the present invention, avoiding transmission of acoustic waves across boundaries with the window, overcomes this problem. Therefore the CMUT with active window arrangement of the present invention reduces reverb and increases bandwidth.

This improvement is particularly significant for instance for in-body disposable catheters wherein often the acoustic window element can be in direct contact with blood (for instance for intravascular ultrasound (IVUS) or intracardiac echocardiography (ICE)). In may be preferable in particular examples to provide probes within which the device of the present invention may be incorporated with a covering layer which is impedance matched with tissue, for long term protection. However in such probes also the additional pressure output and receive sensitivity are highly valuable. By way of example, fluor polymers (e.g. PVDF) materials are very stable, and bio compatible, and hence make effective materials for such applications.

The CMUT element may be fabricated according to standard technologies for such elements, and these will be well known to the skilled person.

By way of non-limiting example, a PVDF foil (for use as the EAP element 26) can be fabricated through a spin-coating process, wherein CMUT element is spin-coated (at wafer level) with a PVDF solution. This is a known fabrication technology, and is described for example in V F Cardoso et al, "Micro and nanofilms of poly(vinylidene fluoride) with controlled thickness, morphology and electroactive crystalline phase for sensor and actuator applications", 2011 Smart Mater. Struct. 20 087002.

Other EAP materials may alternatively be used for EAP element, as are described in greater detail in passages to follow.

The top electrode 42 disposed on the exposed top surface 50 of the EAP element 26 may, by way of non-limiting example, be formed by local sputtering or evaporation over an mask applied over said exposed surface of the EAP element 26.

It has been found in experiments conducted by the inventors that optimizing the coverage of the top electrode 42 relative to the CMUT element membrane 24 (i.e. the percentage of a surface of the membrane which the top electrode 42 covers or extends over, the bending deflection of the CMUT element can be enhanced as a result of the bending of the EAP, resulting in boosted pressure output of the device.

The activation of the top electrode 42 stimulates deformation of the EAP element 26. However, by optimizing the surface area of the electrode, the particular portion and proportion of the EAP element stimulated can be adjusted. In particular, it has been found that by providing a top electrode 42 having a surface area arranged to cover or extend over just a particular proportion of the CMUT membrane arranged beneath the EAP element, a resulting deformation pattern of the EAP element is such as to enhance the vibrational action of the CMUT membrane.

In the experimental calculations, a CMUT element was chosen having a membrane 24 of diameter 120 micrometers (where 'diameter' refers to a dimension parallel with an upper surface of the CMUT element membrane 24 to which the EAP element 26 is coupled). To determine the boost to the bending deflection created by the EAP element, the bending of EAP element alone was calculated and considered. Since this deflection will be added to any deflection created by the CMUT element, it can be determined the enhancement effect of the EAP element.

An EAP element 26 was used comprising PVDF, and selected to have a thickness such that the EAP element has an eigenfrequency which substantially matches that of the CMUT element (for resonance matching of the two structures), i.e. around 8-10 MHz for the examined scenario.

For different coverages of the top electrode 42 over the CMUT membrane 24, the static displacement amplitude of the whole dual-element structure, as a result of applied DC voltage to the EAP element alone was determined. Based upon this, it could be determined, for different coverages of the electrode of the CMUT membrane 24, how the EAP element would amplify the bending of the CMUT element, and thereby enhance the output pressure and receiving sensitivity of the device 20.

A full 100% electrode coverage of the CMUT membrane 24 will not result in an additional bending moment, and will only expand PVDF film in-plane (therefore not affecting bending of the CMUT membrane). Therefore a partial coverage of the top electrode was considered (and its effect on the bending amplification).

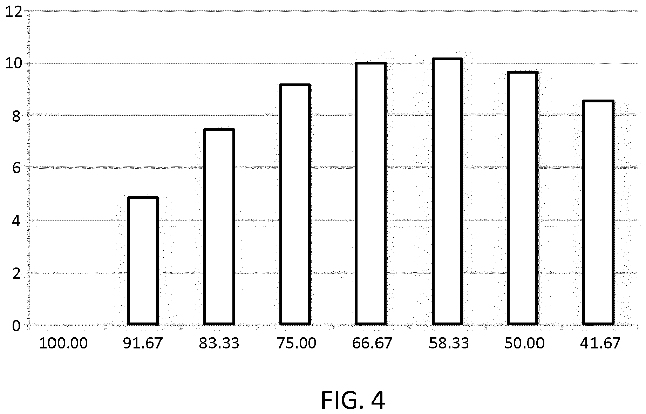

The results of the investigation are shown in Fig. 4 which shows the pressure output enhancement created by the EAP element 22 (y-axis, units: %) as a function of electrode coverage of the CMUT element membrane 24 (x-axis, units: %).

It can be seen from the graph of Fig. 4 that the achieved pressure output enhancement increases as electrode coverage of the membrane 24 increases and peaks at around 65% coverage, for which a pressure output enhancement of just over 10% is achieved. Above 65% coverage, the output enhancement begins to decline, as the increased coverage begins to result in greater in-plane deformation, reducing the out-of-plane deformation effect which produces the bending enhancement for the device.

Optimal electrode coverage was hence found to be around 65%, with 60-65% coverage being a preferred range, and 60-70% being an advantageous range.

The experiment conducted was a very simple one, and the results conservative compared to what is anticipated to be achieved in many practical systems, for instance where the CMUT transducer may be operated in so-called collapse mode, which boosts output performance. In collapse mode a CMUT is driven by a bias voltage that drives a central portion of the flexible membrane 24 across the cavity 30 towards the opposing electrode 36 and is provided with a stimulus having a set frequency that causes the diaphragm or flexible membrane to resonate at the set frequency.

Where collapse is taken into account, it is anticipated that achievable output enhancement by the EAP element, with optimal electrode coverage, may be around 25% in each of ultrasound generating and ultrasound sensing modes.

Hence in addition to enhanced output power, the EAP element also provides enhanced sensitivity in detecting ultrasound waves. It has been suggested in literature for instance, in particular in Electrical Engineering and Computer Sciences, University of California at Berkeley, Technical Report No. UCB/EECS-2015-154, May 26, 2015 that the output signal of a PVDF EAP element 26 in particular may be as much as two to three times greater than that of the CMUT element 22.

In total, it has been found that a 10dB greater sensitivity may be achieved using the active EAP window configuration of the present invention compared to an arrangement in which only the CMUT element is used to detect ultrasound waves.

As discussed above, the controller 46 may be adapted, in accordance with a one control mode, to control the device 20 to sense ultrasound oscillations by sensing electrical signals generated by the CMUT element 22 and the electroactive polymer (EAP) element 26.

When operating in transmit (or ultrasound generating mode), the CMUT element 22 and EAP element 26 are driven concurrently with in-phase AC signals of the same frequency. By contrast, when operating in sensing mode, it may be preferable to sense received signals fully independently from each of the EAP element and the CMUT element. Hence it can be beneficial to decouple the CMUT element and EAP element during receiving.

To this end, the CMUT element 22 and the electroactive polymer element 26 may be connected separately to the controller 46, such that independent electrical signals are sensed at each of the CMUT element and electroactive polymer element.

This de-coupling of the CMUT element and EAP element has two main advantages.

Firstly, it may often be the case that a receive signal output by the EAP element 26 has a lower signal to noise ratio (SNR) than that of a combined EAP element 26 and CMUT element 22 signal. By providing individual connections to each element, the signals can be separated, and the lower SNR of the EAP element retained.

Secondly, the (potentially different frequency) responses of the CMUT 22 and EAP element 26 respectively can be measured separately and independently and compared in subsequent computation. This may be useful for instance for finding artifacts in one or other of the signals, where the comparison will allow identification of this, or for otherwise increasing accuracy.

This is particularly the case for received ultrasound signals which are far away from the (mechanical) resonance frequency of the CMUT/PVDF system. In such cases the response of the CMUT element 22 will be almost negligible, while the EAP element signal will typically be significantly stronger, being less affected by the frequency disparity, due to the thickness-mode contribution (induced oscillations in the EAP element 26 thickness) which becomes more significant away from resonance.

The controller 46 may be adapted in accordance with one or more examples to select only the most sensitive of the CMUT 22 and EAP element 26 to use in sensing ultrasound signals, when it is known for instance that high sensitivity is to be required. This would avoid reduction in overall sensing signal amplitude due to the reduced output of the other of the elements. For instance, for incoming signals of very low acoustic pressure, the sensitivity of the EAP element remains measurable due to thickness deformation of the EAP element, even when the out-of-plane deformation of the overall bi-layer structure (CMUT and EAP element) has significantly reduced, and the CMUT 22 sensing signal has diminished.

Embodiments of the present invention hence provide numerous advantages in comparison with prior art device, as summarized below.

The active acoustic window provided by the EAP element provides extra power output for the device (compared to standard devices having a static window element) when operating in active transmit mode. This improves image quality.

Additional sensitivity in receiving ultrasound signals is also achieved (compared to devices having a static window), which improves CMUT image quality.

In total, the output power and input sensitivity may be boosted by a factor of up to three times compared to standard passive window arrangements, this amounting to an approximately 10 dB increase in signal power (2 dB in generated signal power and 8 dB in receiving sensitivity).

Furthermore, as well as actively boosting power output and receiving sensitivity, the present device mitigates or avoids known causes of deterioration in output power and input sensitivity. In particular, due to the concurrent, parallel vibration of the active window, no reflections are generated at the boundary between the window element (the EAP element in the present invention) and tissue, this normally being caused by the transmission of waves through the static window from the CMUT, and across the impedance mismatched boundary. Conventional devices to mitigate this require perfect acoustic impedance matching to prevent reflections which means different elements must be provided for interfacing with different receiving surface materials.

While providing the above improvements, the active window arrangement of the present invention provides effective mechanical and electrical protection, as well as water permeation protection.

For disposable applications, such as in-body ultrasound using a catheter, or intravascular ultrasound (IVUS) or intracardiac echocardiography (ICE), a single window layer (in the form of the EAP element 24) may be used on CMUT transducers. This contrasts with prior art non-active window structures in which, typically, a first soft window layer is provided, in combination with a second harder layer for protection. The latter is more complex to fabricate and can lead to acoustic reflections at the boundary between the hard and soft layers.

Embodiments of the present invention are suitable for use in any application in which ultrasound transducers are employed. Particular benefits may be achieved in use for in-body ultrasound applications such as intravascular ultrasound (IVUS).

It is envisaged that the embodiments of the present ultrasound device may be utilized within an ultrasound diagnostic imaging system.

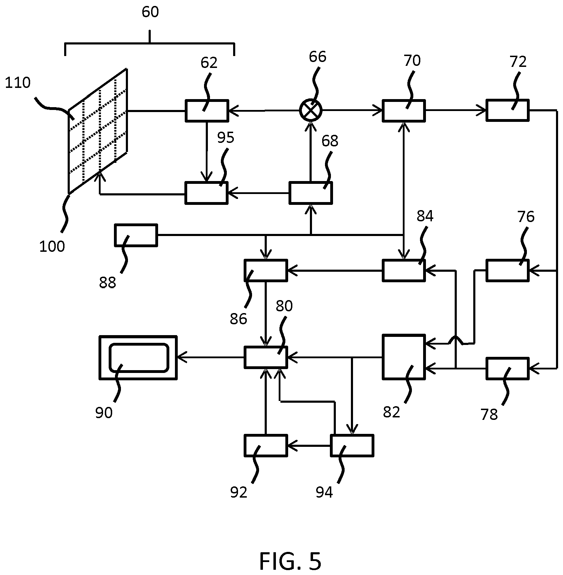

The general operation of an exemplary ultrasound diagnostic imaging system will now be described, with reference to Fig. 5.

The exemplary system comprises an array transducer probe 60 which has a CMUT transducer array 100 for transmitting ultrasound waves and receiving echo information. Each of the CMUT transducers of the array may be provided an active EAP window element in accordance with embodiments of the invention. The transducer array 100 may additionally comprise some piezoelectric transducers formed of materials such as PZT or PVDF. The transducer array 100 is a two-dimensional array of transducers 110 capable of scanning in a 2D plane or in three dimensions for 3D imaging. In another example, the transducer array may be a 1D array.

The transducer array 100 is coupled to a microbeamformer 62 in the probe which controls reception of signals by the CMUT array cells or piezoelectric elements. Microbeamformers are capable of at least partial beamforming of the signals received by subarrays (or "groups" or "patches") of transducers as described in US Patents 5,997,479 (Savord et al.), 6,013,032 (Savord), and 6,623,432 (Powers et al.).

Note that the microbeamformer is entirely optional. The examples below assume no analog beamforming.

The microbeamformer 62 is coupled by the probe cable to a transmit/receive (T/R) switch 66 which switches between transmission and reception and protects the main beamformer 70 from high energy transmit signals when a microbeamformer is not used and the transducer array is operated directly by the main system beamformer. The transmission of ultrasound beams from the transducer array 60 is directed by a transducer controller 68 coupled to the microbeamformer by the T/R switch 66 and a main transmission beamformer (not shown), which receives input from the user's operation of the user interface or control panel 88.

One of the functions controlled by the transducer controller 68 is the direction in which beams are steered and focused. Beams may be steered straight ahead from (orthogonal to) the transducer array, or at different angles for a wider field of view. The transducer controller 68 can be coupled to control a DC bias control 95 for the CMUT array. The DC bias control 95 sets DC bias voltage(s) that are applied to the CMUT cells.

In the reception channel, partially beamformed signals are produced by the microbeamformer 62 and are coupled to a main receive beamformer 70 where the partially beamformed signals from individual patches of transducers are combined into a fully beamformed signal. For example, the main beamformer 70 may have 128 channels, each of which receives a partially beamformed signal from a patch of dozens or hundreds of CMUT transducer cells or piezoelectric elements. In this way the signals received by thousands of transducers of a transducer array can contribute efficiently to a single beamformed signal.

The beamformed reception signals are coupled to a signal processor 72. The signal processor 72 can process the received echo signals in various ways, such as band-pass filtering, decimation, I and Q component separation, and harmonic signal separation which acts to separate linear and nonlinear signals so as to enable the identification of nonlinear (higher harmonics of the fundamental frequency) echo signals returned from tissue and micro-bubbles. The signal processor may also perform additional signal enhancement such as speckle reduction, signal compounding, and noise elimination. The band-pass filter in the signal processor can be a tracking filter, with its pass band sliding from a higher frequency band to a lower frequency band as echo signals are received from increasing depths, thereby rejecting the noise at higher frequencies from greater depths where these frequencies are devoid of anatomical information.

The beamformers for transmission and for reception are implemented in different hardware and can have different functions. Of course, the receiver beamformer is designed to take into account the characteristics of the transmission beamformer. In Fig. 5 only the receiver beamformers 62, 70 are shown, for simplicity. In the complete system, there will also be a transmission chain with a transmission micro beamformer, and a main transmission beamformer.

The function of the micro beamformer 62 is to provide an initial combination of signals in order to decrease the number of analog signal paths. This is typically performed in the analog domain.

The final beamforming is done in the main beamformer 70 and is typically after digitization.

The transmission and reception channels use the same transducer array 60' which has a fixed frequency band. However, the bandwidth that the transmission pulses occupy can vary depending on the transmission beamforming that has been used. The reception channel can capture the whole transducer bandwidth (which is the classic approach) or by using bandpass processing it can extract only the bandwidth that contains the useful information (e.g. the harmonics of the main harmonic).

The processed signals are coupled to a B mode (i.e. brightness mode, or 2D imaging mode) processor 76 and a Doppler processor 78. The B mode processor 76 employs detection of an amplitude of the received ultrasound signal for the imaging of structures in the body such as the tissue of organs and vessels in the body. B mode images of structure of the body may be formed in either the harmonic image mode or the fundamental image mode or a combination of both as described in US Pat. 6,283,919 (Roundhill et al.) and US Pat. 6,458,083 (Jago et al.) The Doppler processor 78 processes temporally distinct signals from tissue movement and blood flow for the detection of the motion of substances such as the flow of blood cells in the image field. The Doppler processor 78 typically includes a wall filter with parameters which may be set to pass and/or reject echoes returned from selected types of materials in the body.

The structural and motion signals produced by the B mode and Doppler processors are coupled to a scan converter 82 and a multi-planar reformatter 94. The scan converter 82 arranges the echo signals in the spatial relationship from which they were received in a desired image format. For instance, the scan converter may arrange the echo signal into a two dimensional (2D) sector-shaped format, or a pyramidal three dimensional (3D) image. The scan converter can overlay a B mode structural image with colors corresponding to motion at points in the image field with their Doppler-estimated velocities to produce a color Doppler image which depicts the motion of tissue and blood flow in the image field. The multi-planar reformatter will convert echoes which are received from points in a common plane in a volumetric region of the body into an ultrasound image of that plane, as described in US Pat. 6,443,896 (Detmer). A volume renderer 92 converts the echo signals of a 3D data set into a projected 3D image as viewed from a given reference point as described in US Pat. 6,530,885 (Entrekin et al.).

The 2D or 3D images are coupled from the scan converter 82, multi-planar reformatter 94, and volume renderer 92 to an image processor 80 for further enhancement, buffering and temporary storage for display on an image display 90. In addition to being used for imaging, the blood flow values produced by the Doppler processor 78 and tissue structure information produced by the B mode processor 76 are coupled to a quantification processor 84. The quantification processor produces measures of different flow conditions such as the volume rate of blood flow as well as structural measurements such as the sizes of organs and gestational age. The quantification processor may receive input from the user control panel 88, such as the point in the anatomy of an image where a measurement is to be made. Output data from the quantification processor is coupled to a graphics processor 86 for the reproduction of measurement graphics and values with the image on the display 90, and for audio output from the display device 90. The graphics processor 86 can also generate graphic overlays for display with the ultrasound images. These graphic overlays can contain standard identifying information such as patient name, date and time of the image, imaging parameters, and the like. For these purposes the graphics processor receives input from the user interface 88, such as patient name. The user interface is also coupled to the transmit controller 68 to control the generation of ultrasound signals from the transducer array 60' and hence the images produced by the transducer array and the ultrasound system. The transmit control function of the controller 68 is only one of the functions performed. The controller 68 also takes account of the mode of operation (given by the user) and the corresponding required transmitter configuration and band-pass configuration in the receiver analog to digital converter. The controller 68 can be a state machine with fixed states.

The user interface is also coupled to the multi-planar reformatter 94 for selection and control of the planes of multiple multi-planar reformatted (MPR) images which may be used to perform quantified measures in the image field of the MPR images.

As discussed above, embodiments of the invention make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. An ultrasound transducer device (20), comprising:
a capacitive micromachined ultrasonic transducer, CMUT, element (22);
an electroactive polymer element (26) coupled to and at least partially covering a surface of the CMUT element; and
a controller (46) adapted to control the ultrasound device to generate ultrasound oscillations by driving the CMUT element and the electroactive polymer element concurrently, each with a drive signal of the same AC frequency.

2. An ultrasound transducer device (20) as claimed in claim 1, wherein the electroactive polymer element (26) is directly coupled to the CMUT element (22).

3. An ultrasound transducer device (20) as claimed in any preceding claim, wherein the controller (46) is adapted, in accordance with at least one control mode, to control the device to sense ultrasound oscillations by sensing electrical signals generated by the CMUT element (22) and the electroactive polymer element (26).

4. An ultrasound transducer device (20) as claimed in claim 3, wherein the CMUT element (22) and the electroactive polymer element (26) are connected separately to the controller (46), such that independent electrical signals are sensed at each of the CMUT element and electroactive polymer element.

5. An ultrasound transducer device (20) as claimed in any preceding claim, wherein the controller (46) is adapted, in accordance with at least one control mode, to drive both the CMUT (22) and electroactive polymer (26) elements with a single drive signal, the elements being connected in electrical parallel or electrical series by at least one provided interconnection arrangement.

6. An ultrasound transducer device (20) as claimed in any preceding claim, wherein the controller (46) is adapted in accordance with at least one control mode to drive the CMUT (22) and electroactive polymer (26) elements by separate drive signals.

7. An ultrasound transducer device (20) as claimed in any preceding claim, wherein the device comprises an electrode arrangement in electrical communication with the electroactive polymer element (26) and CMUT element (22) for applying drive signals to the elements, and the electrode arrangement including an electrode (42) disposed on an exposed surface (50) of the electroactive polymer element.

8. An ultrasound transducer device (20) as claimed in claim 7, wherein the CMUT element comprises a membrane (24) drivable to vibrate, the electroactive polymer element being coupled to the membrane, and wherein said electrode (42) is arranged on said exposed surface of the electroactive polymer element such as to cover from 50% to 75% of the membrane (24), and preferably from 60% to 70% of the membrane, and even more preferably from 60% to 65% of the membrane.

9. An ultrasound transducer device (20) as claimed in any preceding claim, wherein, in accordance with at least one control mode, the controller (46) is adapted to drive the CMUT element (22) and the electroactive polymer element (26) with drive signals of different respective amplitudes, and
optionally wherein in accordance with at least one control mode, the controller (46) is adapted to drive the electroactive polymer element (26) with a drive signal of a lower amplitude than the drive signal used to drive the CMUT element (22).

10. An ultrasound transducer device (20) as claimed in any preceding claim, wherein the electroactive polymer element (26) and the CMUT element (22) are each in the form of a layer, and
optionally wherein the electroactive polymer element layer and CMUT element layer form a bi-layer structure.

11. An ultrasound transducer device (20) as claimed in any preceding claim, wherein the CMUT element comprises a membrane (24) drivable to vibrate and wherein:
the electroactive polymer element (26) has a thickness which is from 8 to 12 times greater than a thickness of the membrane of the CMUT element; and/or
the CMUT element membrane (24) has a thickness of from 1 to 1.5 micrometers.

12. An ultrasound transducer device (20) as claimed in any preceding claim, wherein the electroactive polymer element (26) comprises Polyvinylidene fluoride electroactive polymer material.

13. A method of controlling an ultrasound transducer device (20), the device comprising a capacitive micromachined ultrasonic transducer, CMUT, element (22), and
an electroactive polymer element (26) coupled to and at least partially covering a surface of the CMUT element,
and the method comprising:
generating ultrasound oscillations by driving both the CMUT element and the electroactive polymer element concurrently, each with a drive signal of the same AC frequency.

14. A method as claimed in claim 13, further comprising, in accordance with at least one operating mode, sensing ultrasound oscillations by sensing electrical signals generated by the CMUT element (22) and the electroactive polymer element (26), and optionally wherein independent electrical signals are sensed at each of the CMUT element (22) and electroactive polymer element.

15. An ultrasound diagnostic imaging system comprising an ultrasound transducer device (20) as claimed in any of claims 1-12.
